# EUROPÄISCHE PATENTSCHRIFT

(11) **EP 2 842 398 B1**
(45) Veröffentlichungstag und Bekanntmachung des Hinweises auf die Patenterteilung: **16.06.2021**
(21) Anmeldenummer: 13723683.2
(22) Anmeldetag: 24.04.2013
(51) Int. Cl.: H05B 47/20, H05B 47/175, H05B 47/10, G05B 15/00

(54) **VERFAHREN ZUR UMKONFIGURATION VON KOMPONENTEN UND KOMPONENTE**
METHOD FOR RECONFIGURING COMPONENTS, AND COMPONENT
PROCÉDÉ DE RECONFIGURATION DE COMPOSANTS ET COMPOSANT

(30) Priorität: 27.04.2012 DE 102012207023
(43) Veröffentlichungstag der Anmeldung: 04.03.2015
(73) Patentinhaber: Zumtobel Lighting GmbH, 6850 Dornbirn (AT)
(72) Erfinder: BÖHNEL, Michael, A-6850 Dornbirn (AT)
(74) Vertreter: Thun, Clemens
(86) Internationale Anmeldenummer: PCT/EP2013/058505
(87) Internationale Veröffentlichungsnummer: WO 2013/160355

(56) Entgegenhaltungen:
- DE-A1-102004 061 294
- FR-A1- 2 939 597
- US-A- 5 770 928
- US-A1- 2006 125 426
- US-A1- 2010 262 296
- US-B2- 6 736 528
- US-B2- 8 135 946
- CONTENTI C ED - INSTITUTE OF ELECTRICAL AND ELECTRONICS ENGINEERS: "Digitally addressable DALI dimming ballast", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, Bd. 2, 10. März 2002 (2002-03-10), Seiten 936-942, XP010583030, DOI: 10.1109/APEC.2002.989357 ISBN: 978-0-7803-7404-1

## Beschreibung

Die vorliegende Erfindung betrifft ein Verfahren zur Umkonfiguration von in einem Beleuchtungssystem angeordneten Komponenten, wobei bei der Umkonfiguration einer Komponente zumindest ein Teil der in der Komponente hinterlegten Software bzw. Daten aktualisiert wird und/oder zusätzliche Software bzw. Daten in der Komponente hinterlegt werden, sowie eine entsprechende Komponente.

Beleuchtungssysteme weisen häufig eine Vielzahl von Komponenten auf, die verschiedenste Aufgaben innerhalb des Beleuchtungssystems erfüllen. So werden beispielsweise in Beleuchtungssystemen Lampenbetriebsgeräte als Komponenten verwendet, die die Steuerung einer entsprechenden Lampe übernehmen und dabei gleichzeitig über einen Bus mit einer Zentrale eines Beleuchtungssystems kommunizieren können. Ebenso könnten aber auch Leuchten als Komponenten in den Beleuchtungssystemen eingesetzt werden, die sowohl Leuchtmittel als auch entsprechende Steuerungs- und Kommunikationsmittel aufweisen. Desweiteren sind aber auch Komponenten denkbar, die beispielsweise zur Steuerung von Verdunklungseinheiten vorgesehen sind, ebenso wie Controller, die zur Steuerung mehrerer Leuchten vorgesehen sein können.

Grundsätzlich betrifft die vorliegende Erfindung jede Komponente eines Beleuchtungssystems in der Software bzw. Daten hinterlegt sind, die zur Steuerung der Komponente bzw. an die Komponente angeschlossener Geräte verwendet wird und dabei die Möglichkeit bietet, dass die Software bzw. Daten aktualisiert und damit erneuert bzw. verändert werden und/oder zusätzliche Software bzw. Daten in der Komponente hinterlegt werden können. Hierzu weist eine Komponente häufig eine Recheneinheit bzw. CPU mit entsprechendem Programm- und Datenspeicher auf.

Bisher ist es bei derartigen Komponenten vorgesehen, dass beispielsweise für ein Update bzw. eine Aktualisierung der Software bzw. Daten die Komponente abgeschaltet bzw. deaktiviert wird und dann anschließend die Software bzw. die Daten entsprechend aktualisiert werden. Erst im Anschluss an den Aktualisierungsvorgang wird die Komponente dann wieder angeschaltet bzw. aktiviert. Ein derartiges Update bzw. eine derartige Aktualisierung kann beispielsweise dann erforderlich sein, wenn nach Inbetriebnahme der Komponente Fehler in der Software bzw. den Daten auftreten oder die Funktionalität der Komponente geändert oder aktualisiert werden soll. Auch bei einer Erweiterung des Funktionsumfangs der Komponente wird die Komponente bisher deaktiviert bzw. abgeschaltet, um dann zusätzliche Software bzw. Daten in der Komponente zu hinterlegen bzw. aufzuspielen und hierdurch den Funktionsumfang entsprechend zu erweitern.

Bei einer derartigen Rekonfiguration bzw. Umkonfiguration solcher in einem Beleuchtungssystem angeordneten Komponenten, ist es dementsprechend bisher notwendig bzw. üblich, dass die Komponente abgeschaltet bzw. deaktiviert werden, was jedoch beispielsweise bei entsprechenden Leuchten nicht immer gewünscht ist.

Aus der DE 10 2004 061294 A1 ist daher ein Verfahren zur Programmierung eines Betriebsgeräts für Leuchtmittel und ein Betriebsgerät für Leuchtmittel bekannt, bei dem über eine von außen zugängliche Schnittstelle eine Firmware des Betriebsgeräts und/oder der Schnittstelle während des Betrieb des Betriebsgeräts programmierbar ist.

Aus CONTENTI C ED - INSTITUTE OF ELECTRICAL AND ELECTRONICS ENGINEERS: "Digitally addressable DALI dimming ballast", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, Bd. 2, 10. März 2002 (2002-03-10), Seiten 936-942, XP010583030, DOI: 10.1109/APEC.2002.989357 ISBN: 978-0-7803-7404-1 ist bekannt, dass die Software bzw. Daten in Komponenten eines Beleuchtungssystems Fehlerdiagnosefunktionen aufweisen können.

Aus der US 8 135 946 B2 ist ein Verfahren zu Programmierung eines Betriebsgeräts für Beleuchtungsmittel bekannt, wobei das Bediengerät eine Firmware und eine Schnittstelle zum Empfangen von externen Steuerbefehlen zum Betreiben des Beleuchtungsmittels aufweist.

Der vorliegenden Erfindung liegt nunmehr die Aufgabe zugrunde, ein Verfahren zur Umkonfiguration bzw. eine entsprechende Komponente weiter zu verbessern, insbesondere im Hinblick auf Fehlerdiagnosefunktionen als Teil der Software.

Die Aufgabe wird durch ein Verfahren gemäß Anspruch 1 und durch eine Komponente gemäß Anspruch 11 gelöst. Vorteilhafte Weiterbildungen der Erfindung sind Gegenstand der abhängigen Ansprüche.

Erfindungsgemäß wird ein Verfahren zur Umkonfiguration von in einem Beleuchtungssystem angeordneten Komponenten vorgeschlagen, wobei bei der Umkonfiguration einer Komponente zumindest ein Teil der in der Komponente hinterlegten Software aktualisiert wird und/oder zusätzliche Software in der Komponente hinterlegt wird und die Umkonfiguration hierbei während des laufenden Betriebs der Komponente erfolgt. Bei zumindest bei einem Teil der Software handelt es sich hierbei um Fehlerdiagnosefunktionen, die Fehler in der Komponente bzw. an die Komponente angeschlossener Geräte diagnostizieren und auswerten, wobei bei Auftreten eines Fehlers in der Komponente bzw. an die Komponente angeschlossener Geräte die Fehlerdiagnosefunktionen aktualisiert werden und/oder zusätzliche Fehlerdiagnosefunktionen in der Komponente hinterlegt werden.

Vorteilhafterweise kann hierbei vorgesehen sein, dass der Teil der Software aktualisiert wird, der im Moment der Umkonfiguration nicht durch die Komponente genutzt wird, d.h., es erfolgt nur eine partielle Aktualisierung der Software.

Hierdurch muss die Komponente zur Umkonfiguration nicht abgeschaltet bzw. deaktiviert werden, wodurch für einen Verbraucher bzw. Nutzer die Umkonfiguration nicht mehr störend wahrnehmbar ist.

So könnte beispielsweise eine Leuchte bzw. ein Lampenbetriebsgerät im Dimmbetrieb betrieben werden, während gleichzeitig derjenige Teil der Software aktualisiert bzw. geändert oder erneuert wird der Diagnosefunktionen betrifft.

Hierbei kann vorgesehen sein, dass die Komponente bevor eine entsprechende Umkonfiguration durchgeführt wird, lediglich Grundfunktionen zum Betrieb aufweist. Durch die Umkonfiguration wird dann zusätzliche Software in der Komponente hinterlegt, durch die die Komponente um zusätzliche Funktionen erweitert wird. Diese Vorgehensweise bietet sich beispielsweise dann an, wenn eine Vielzahl gleicher Komponenten hergestellt werden soll, die alle die gleichen Grundfunktionen aufweisen, dann aber zu einem späteren Zeitpunkt, beispielsweise lange nach Installation der Komponenten, bei einzelnen Komponenten zusätzliche Funktionen gewünscht werden. In diesem Fall ist es dann möglich, dass die entsprechenden Komponenten um zusätzliche Funktionen erweitert werden, ohne dass der laufende Betrieb der Komponenten gestört werden muss.

Desweiteren kann vorteilhafterweise vorgesehen sein, dass es sich zumindest bei einem Teil der Software um Parameter handelt, die zur Steuerung der Komponente bzw. an die Komponente angeschlossener Geräte verwendet werden, wobei es sich beispielsweise um Dimmkurven handeln kann. Weiterhin kann vorgesehen sein, dass die Parameter aktualisiert werden. Hierbei kann dann vorgesehen sein, dass bei der Aktualisierung der Parameter die Komponente während der Übertragung neuer Parameter auf die Komponente weiterhin die alten Parameter und nach Abschluss der Übertragung die neuen Parameter nutzt, wobei nach Abschluss der Übertragung die alten Parameter dann auch gelöscht werden können.

Bei der Hinterlegung zusätzlicher neuer Parameter kann vorgesehen sein, dass die Komponente nach Abschluss der Übertragung der zusätzlichen Parameter dann die zusätzlichen Parameter nutzt.

Durch die Aktualisierung der Fehlerdiagnosefunktionen und/oder das Hinterlegen zusätzlicher Fehlerdiagnosefunktionen bei Auftreten eines Fehlers ist es möglich, dass bei Auftreten eines bestimmten Fehlers, die für diesen Fehler optimale Fehlerdiagnosefunktion auf die Komponente übertragen wird, wodurch dieser Fehler besser diagnostiziert und ausgewertet werden kann. Zugleich ist es auch möglich neuartige Fehler durch neue Fehlerdiagnosefunktionen entsprechend zu diagnostizieren bzw. auszuwerten. Vorteilhaft ist hierbei insbesondere, dass die Umkonfiguration während des laufenden Betriebs der Komponente erfolgt, da ein vorübergehendes Abschalten bzw. Deaktivieren der Komponente möglicherweise zum Verlust der später benötigten Informationen über den Fehler führen könnte, da durch ein Abschalten bzw. Deaktivieren entsprechende Daten möglicherweise gelöscht werden würden.

Vorzugsweise kann auch vorgesehen sein, dass es sich zumindest bei einem Teil der Software um Funktionen handelt, die es ermöglichen, dass Berechnungsaufgaben, die von einer Komponente während des Betriebs auszuführen sind, auf eine andere Komponente des Beleuchtungssystems ausgelagert werden.

Hierdurch ist es beispielsweise möglich, dass eine Komponente eine benachbarte Komponente bei entsprechenden intensiven Berechnungsaufgaben unterstützt, was beispielsweise beim Einsatz von Komponenten unterschiedlicher Generationen sinnvoll sein kann, da diese sich hinsichtlich ihrer zur Verfügung stehenden Rechenleistung teilweise deutlich unterscheiden können. Insbesondere bei älteren Komponenten kann es hierbei u.a. vorkommen, dass neuere Funktionen mit entsprechend rechenintensiven Aufgaben, aufgrund der nicht ausreichend vorhandenen Rechenleistung nicht ausgeführt bzw. implementiert werden können. Ebenso ist es durch die Auslagerung von Rechenaufgaben auch möglich, die Energieeffizienz, die Rechenzeit oder auch die Ressourcen der Komponenten bzw. des Beleuchtungssystems zu optimieren.

Erfindungsgemäß wird desweiteren eine Komponente eines Beleuchtungssystems vorgeschlagen, die eine Managementeinheit aufweist, wobei die Managementeinheit dazu ausgebildet ist, eine Aktualisierung zumindest eines Teils der in der Komponente hinterlegten Software und/oder die Hinterlegung zusätzlicher Software in der Komponente während des laufenden Betriebs der Komponente zu ermöglichen. Bei zumindest einem Teil der Software handelt es sich hierbei um Fehlerdiagnosefunktionen, zur Diagnose und Auswertung von Fehlern in der Komponente bzw. an der Komponente angeschlossenen Geräte. Weiterhin ist die Managementeinheit dazu ausgebildet bei Auftreten eines Fehlers in der Komponente bzw. an die Komponente angeschlossener Geräte die Fehlerdiagnosefunktionen zu aktualisieren werden und/oder zusätzliche Fehlerdiagnosefunktionen in der Komponente zu hinterlegen.
Vorzugsweise sind der Managementeinheit hierbei die Ausstattung und der Zustand der Komponente und die in der Komponente hinterlegte Software bekannt.

Bei den zuvor erwähnten Komponenten kann es sich zumindest bei einem Teil um Lampenbetriebsgeräte oder auch um Controller handeln, wobei die Controller zur Ansteuerung mehrerer Leuchten oder Lampenbetriebsgeräte vorgesehen sind.

Nachfolgend soll die Erfindung anhand von Ausführungsbeispielen und der beiliegenden Zeichnung näher erläutert werden. Es zeigen:

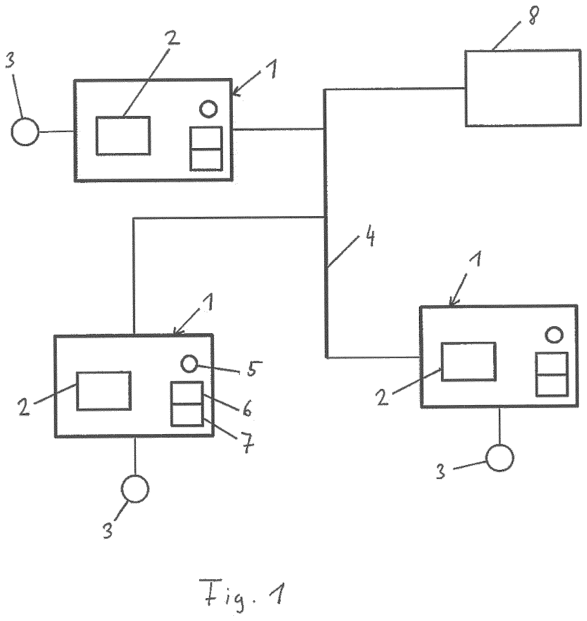

- Figur 1: ein Beleuchtungssystem mit mehreren als Lampenbetriebsgeräten ausgestalteten erfindungsgemäßen Komponenten.

Figur 1 zeigt ein Beleuchtungssystem, in dem mehrere erfindungsgemäße Komponenten angeordnet sind. Bei diesen erfindungsgemäßen Komponenten handelt es sich um Lampenbetriebsgeräte 1, die jeweils eine Lampe bzw. Leuchte 3 steuern bzw. betreiben. Wie der Figur 1 zu entnehmen ist, ist jeweils eine Lampe bzw. Leuchte 3 an eines der Lampenbetriebsgeräte 1 angeschlossen.

Zusätzlich ist auch noch vorgesehen, dass die Lampenbetriebsgeräte 1 mit einer Zentraleinheit 8 verbunden sind. Diese Verbindung kann beispielsweise über einen entsprechenden Bus 4 erfolgen. Jedes der Lampenbetriebsgeräte 1 weist hierzu entsprechende Kommunikationsmittel auf, die ebenso wie die zum Betrieb der Lampe 3 notwendigen Mittel nicht in Figur 1 gezeigt sind.

Zusätzlich weist jedes der Lampenbetriebsgeräte auch eine Recheneinheit bzw. CPU 5, einen Software- bzw. Programmspeicher 6 und einen Datenspeicher 7 sowie eine Managementeinheit 2 auf. Die Speicher 6 und 7 dienen hierbei der Speicherung der Software bzw. Daten, wobei die CPU 5 entsprechend der abgespeicherten Software bzw. den abgespeicherten Daten Rechenoperationen durchführt und dadurch die Lampenbetriebsgeräte 1 bzw. die an die Lampenbetriebsgeräte 1 angeschlossenen Lampen 3 entsprechend regelt bzw. steuert.

Die Managementeinheit 2 ist nunmehr dafür vorgesehen, dass eine Umkonfiguration der Lampenbetriebsgeräte 1 auch während des laufenden Betriebs der Lampenbetriebsgeräte 1 erfolgen kann. Bei der Umkonfiguration eines Lampenbetriebsgeräts 1 werden hierbei zumindest ein Teil der in dem Lampenbetriebsgerät 1 hinterlegten Software bzw. Daten aktualisiert und/oder zusätzliche Software bzw. Daten in dem Lampenbetriebsgerät 1 hinterlegt. Bei der Aktualisierung wird hierbei der Teil der Software bzw. Daten aktualisiert, der im Moment der Umkonfiguration nicht durch das Lampenbetriebsgerät 1 genutzt wird. Durch diese Ausgestaltung ist es nicht mehr notwendig, dass das Lampenbetriebsgerät 1 abgeschaltet bzw. deaktiviert werden muss. Dementsprechend ist eine Umkonfigurierung für einen Verbraucher bzw. Nutzer nicht mehr erkennbar und wirkt sich somit auch nicht mehr störend aus.

Desweiteren kann vorgesehen sein, dass die Lampenbetriebsgeräte 1 lediglich mit bestimmten Grundfunktionen ausgeliefert und installiert werden, die zum Zeitpunkt der Installation ausreichend sind. Zu einem späteren Zeitpunkt könnte es jedoch dann wünschenswert sein, dass einzelnen Lampenbetriebsgeräten 1 zusätzliche Funktionen hinzugefügt werden können, ohne dass die Lampenbetriebsgeräte 1 deaktiviert bzw. ausgeschaltet werden müssen. Durch die vorliegende Erfindung besteht nunmehr auch die Möglichkeit, dass zusätzliche Software bzw. Daten in dem Lampenbetriebsgerät 1 während des laufenden Betriebs hinterlegt werden können. Somit ist eine Erweiterung der Funktionalität einzelner Lampenbetriebsgeräte 1 auch während des laufenden Betriebs möglich.

Die zur Aktualisierung bzw. Erweiterung vorgesehene Software bzw. Daten, kann beispielsweise von der Zentraleinheit 8 in dem Beleuchtungssystem über den Bus 4 an die Lampenbetriebsgeräte 1 und somit an die Managementeinheit 2 übermittelt werden. Alternativ könnte aber auch vorgesehen sein, dass die Software bzw. Daten beispielsweise von einem Wartungstechniker an die Lampenbetriebsgeräte übermittelt werden.

Zu den Managementeinheiten 2 ist anzumerken, dass diesen sowohl die Ausstattung als auch der Zustand der Lampenbetriebsgeräte 1 als auch die auf den Lampenbetriebsgeräten 1 hinterlegte Software bzw. Daten bekannt sind, wodurch es der Managementeinheit 2 möglich ist, ohne Weiteres die entsprechende Umkonfiguration anzustoßen bzw. auszuführen.

Bei einer Ausführungsvariante der vorliegenden Erfindung kann dann beispielsweise vorgesehen sein, dass in dem Lampenbetriebsgerät 1 eine Dimmkurve als ein Teil der Software bzw. Daten hinterlegt ist. Nachdem das Lampenbetriebsgerät 1 einige Zeit in Betrieb ist, kann es dann möglicherweise wünschenswert sein, eine neue Dimmkurve in dem Lampenbetriebsgerät 1 zu hinterlegen.

In diesem Fall ist dann erfindungsgemäß vorgesehen, dass während der Übertragung der neuen Dimmkurve das Lampenbetriebsgerät 1 weiterhin die alte Dimmkurve nutzt. Erst nach Abschluss der Übertragung erfolgt dann die Umschaltung auf die neue Dimmkurve. Falls gewünscht, kann dann die alte Dimmkurve freigegeben bzw. gelöscht werden. Alternativ dazu könnte eine neue Dimmkurve auch parallel zur alten Dimmkurve im Lampenbetriebsgerät 1 gewünscht sein. In diesem Fall wird die Dimmkurve wiederum in das Lampenbetriebsgerät 1 übertragen bzw. hinterlegt, wobei dann falls gewünscht nach Abschluss der Übertragung die neue Dimmkurve genutzt werden kann.

Bei einer weiteren Ausführungsvariante kann vorgesehen sein, dass Fehlerdiagnosefunktionen aktualisiert bzw. zusätzlich in einem Lampenbetriebsgerät 1 hinterlegt werden sollen. Dies ist insbesondere dann von Bedeutung, wenn ein Fehler im Lampenbetriebsgerät 1 oder in der angeschlossenen Lampe 3 auftritt. Je nach Fehler kann dann eine Fehlerdiagnosefunktion aktualisiert werden oder eine zusätzliche neue Fehlerdiagnosefunktion auf das Lampenbetriebsgerät 1 übermittelt werden. Hierdurch ist es dann möglich, dass der entsprechende Fehler besser diagnostiziert bzw. ausgewertet werden kann oder aber, dass neuartige Fehler überhaupt erst ausgewertet werden können. Zusätzlich besteht auch die Möglichkeit, dass das Lampenbetriebsgerät 1 dann eine neue Funktion erhält, die ein erhöhtes Logging bzw. eine erhöhte Prüfung oder eine Umschaltung zu einem sicheren Algorithmus bzw. zu einem Algorithmus der weniger Energie verbraucht ermöglicht.

Bei einer weiteren Ausführungsvariante kann vorgesehen sein, dass dem Lampenbetriebsgerät 1 durch die Umkonfiguration Funktionen übermittelt werden, die es ermöglichen, dass Berechnungsaufgaben, die von einem Lampenbetriebsgerät 1 während des Betriebs auszuführen sind, auf ein anderes Lampenbetriebsgerät 1 des Beleuchtungssystems ausgelagert werden können. Durch diese Verteilung von Rechenaufgaben ergibt sich die Möglichkeit, die Rechenleistung und Recheneffizienz der verschiedenen Lampenbetriebsgeräte 1 optimal auszunutzen. Dies kann beispielsweise auch interessant sein, wenn Lampenbetriebsgeräte 1 unterschiedlicher Generationen in einem Beleuchtungssystem Anwendung finden. Insbesondere ältere Lampenbetriebsgeräte 1 weisen eine erheblich schlechtere Rechenleistung im Vergleich zu neueren auf. Dementsprechend kann es bei rechenintensiven Funktionen sinnvoll sein, dass Rechenaufgaben von älteren auf neue Lampenbetriebsgeräte ausgelagert werden.

Die Verteilung der Rechenaufgaben könnte auch dann sinnvoll sein, wenn der Energieverbrauch des gesamten Beleuchtungssystems optimiert werden sollte, da unterschiedliche Lampenbetriebsgerätetypen je nach Rechenaufgabe auch unterschiedlich energieeffizient sind. So ist es vorstellbar, dass eine bestimmte Rechenaufgabe auf einem bestimmten Lampenbetriebsgerättyp besonders energieeffizient ausgeführt werden kann, wohingegen eine andere Rechenaufgabe auf einem anderen Lampenbetriebsgerätetyp besonders energieeffizient durchgeführt werden kann.

Die Verteilung der Rechenaufgaben kann grundsätzlich auch unabhängig von der Umkonfiguration der Komponenten erfolgen, wodurch eine Steigerung bzw. Optimierung der Rechenleistung des gesamten Beleuchtungssystems und auch möglicherweise eine Optimierung der Energieeffizienz erreicht werden kann.

Bei den in Figur 1 gezeigten Lampenbetriebsgeräten 1 handelt es sich lediglich um mögliche Beispiele von Komponenten in Beleuchtungssystemen. Bei den Komponenten kann es sich wie bereits zu Beginn erläutert um viele verschiedene Teile eines Beleuchtungssystems handeln, wobei es sich insbesondere um Komponenten handelt, bei denen Software bzw. Daten aktualisiert oder zusätzlich hinterlegt werden können. Beispielsweise wäre es denkbar, dass zusätzlich in Figur 1 noch ein Controller vorgesehen ist, der mit der Zentraleinheit 8 verbunden ist, wobei die Lampenbetriebsgeräte 1 dann mit diesem Controller verbunden sind. In diesem Fall wäre eine Umkonfiguration dann auch in dem Controller möglich. Außerdem ist auch die Verteilung der Rechenleistung hier möglicherweise sinnvoll, da beispielsweise bei temporär erhöhten Anforderungen im Controller es sinnvoll ist, bestimmte Rechenaufgaben bzw. Algorithmenteile an die Lampenbetriebsgeräte 1 auszulagern und dort berechnen zu lassen und dann die Ergebnisse zurück an den Controller zu melden.

Des Weiteren ist noch anzumerken, dass die zuvor erwähnten Ausführungsvarianten auch gemeinsam in jeder beliebigen Kombination vorgesehen sein können.

## Patentansprüche

1. Verfahren zur Umkonfiguration von in einem Beleuchtungssystem angeordneten Komponenten (1), in denen eine Software hinterlegt ist, wobei bei der Umkonfiguration einer Komponente (1)
zumindest ein Teil der in der Komponente (1) hinterlegten Software aktualisiert wird und/oder zusätzliche Software in der Komponente (1) hinterlegt wird, wobei die Umkonfiguration während des laufenden Betriebs der Komponente (1) erfolgt,
wobei es sich zumindest bei einem Teil der Software um Fehlerdiagnosefunktionen handelt, die Fehler in der Komponente (1) bzw. an die Komponente (1) angeschlossener Geräte (3) diagnostizieren und auswerten,
**dadurch gekennzeichnet,**
**dass** bei Auftreten eines Fehlers in der Komponente (1) bzw. an die Komponente (1) angeschlossener Geräte (3) die Fehlerdiagnosefunktionen aktualisiert werden und/oder zusätzliche Fehlerdiagnosefunktionen in der Komponente hinterlegt werden.

2. Verfahren nach Anspruch 1,
**dadurch gekennzeichnet,**
**dass** der Teil der Software aktualisiert wird, der im Moment der Umkonfiguration nicht durch die Komponente (1) genutzt wird.

3. Verfahren nach Anspruch 1 oder 2,
**dadurch gekennzeichnet,**
**dass** die Komponente (1) vor der Umkonfiguration Grundfunktionen zum Betrieb aufweist und durch die Umkonfiguration mit zusätzlichen Funktionen erweitert wird.

4. Verfahren nach einem der vorherigen Ansprüche,
**dadurch gekennzeichnet,**
**dass** es sich zumindest bei einem Teil der Software um Parameter handelt, die zur Steuerung der Komponente (1) bzw. an die Komponente (1) angeschlossener Geräte (3) verwendet werden,
wobei es sich vorzugsweise bei den Parametern um Dimmkurven handelt.

5. Verfahren nach Anspruch 4,
**dadurch gekennzeichnet,**
**dass** die Parameter aktualisiert werden.

6. Verfahren nach Anspruch 5,
**dadurch gekennzeichnet,**
**dass** bei der Aktualisierung der Parameter die Komponente (1) während der Übertragung neuer Parameter auf die Komponente (1) weiterhin die alten Parameter und nach Abschluss der Übertragung die neuen Parameter nutzt, wobei vorzugsweise nach Abschluss der Übertragung die alten Parameter gelöscht werden.

7. Verfahren nach Anspruch 4, 5 oder 6,
**dadurch gekennzeichnet,**
**dass** bei Hinterlegung zusätzlicher Parameter, die Komponente (1) nach Abschluss der Übertragung der zusätzlichen Parameter die zusätzlichen Parameter nutzt.

8. Verfahren nach einem der vorherigen Ansprüche,
**dadurch gekennzeichnet,**
**dass** es sich zumindest bei einem Teil der Software um Funktionen handelt, welche Berechnungsaufgaben, die von einer Komponente (1) während des Betriebs auszuführen sind, auf eine andere Komponente (1) des Beleuchtungssystems auslagern.

9. Verfahren nach Anspruch 8,
**dadurch gekennzeichnet,**
**dass** durch die Auslagerung von Berechnungsaufgaben die Energieeffizienz, die Rechenzeit und/oder die Ressourcen der Komponenten bzw. des Beleuchtungssystems optimiert werden.

10. Verfahren nach einem der Ansprüche 1 bis 9,
**dadurch gekennzeichnet,**
**dass** es sich zumindest bei einem Teil der Komponenten um Lampenbetriebsgeräte (1) handelt.

11. Verfahren nach einem der Ansprüche 1 bis 10,
**dadurch gekennzeichnet,**
**dass** es sich zumindest bei einem Teil der Komponenten um Controller handelt, die zur Ansteuerung mehrerer Leuchten (3) oder Lampenbetriebsgeräte vorgesehen sind.

12. Komponente (1) für ein Beleuchtungssystem, wobei die Komponente (1) eine hinterlegte Software und eine Managementeinheit (2) aufweist, und wobei die Managementeinheit (2) dazu ausgebildet ist, eine Aktualisierung zumindest eines Teils der in der Komponente (1) hinterlegten Software und/oder die Hinterlegung zusätzlicher Software in der Komponente (1) während des laufenden Betriebs der Komponente (1) zu ermöglichen,
wobei es sich zumindest bei einem Teil der Software um Fehlerdiagnosefunktionen, zur Diagnose und Auswertung von Fehlern in der Komponente (1) bzw. an der Komponente (1) angeschlossenen Geräte (3), handelt,
**dadurch gekennzeichnet,**
**dass** die Managementeinheit (2) dazu ausgebildet ist, bei Auftreten eines Fehlers in der Komponente (1) bzw. an die Komponente (1) angeschlossener Geräte (3) die Fehlerdiagnosefunktionen zu aktualisieren und/oder zusätzliche Fehlerdiagnosefunktionen in der Komponente zu hinterlegen.

13. Komponente nach Anspruch 12,
**dadurch gekennzeichnet,**
**dass** der Managementeinheit (2) die Ausstattung und der Zustand der Komponente (1) und die in der Komponente (1) hinterlegte Software bekannt sind.

14. Komponente nach Anspruch 12 oder 13,
**dadurch gekennzeichnet,**
**dass** zumindest ein Teil der Komponenten Lampenbetriebsgeräte (1) sind.

15. Komponente nach einem der Ansprüche 12 bis 14,
**dadurch gekennzeichnet,**
**dass** zumindest ein Teil der Komponenten Controller sind, die zur Ansteuerung mehrerer Leuchten oder Lampenbetriebsgeräte vorgesehen sind.

## Claims

1. Method for reconfiguring components (1) which are arranged in a lighting system and in which software is stored,
wherein, during the reconfiguration of a component (1), at least a portion of the software stored in the component (1) is updated and/or additional software is stored in the component (1),
wherein the reconfiguration takes place during the ongoing operation of the component (1),
wherein at least a portion of the software involves fault diagnosis functions which diagnose and evaluate faults in the component (1) or in devices (3) connected to the component (1),
**characterized in that**
when a fault occurs in the component (1) or devices (3) connected to the component (1), the fault diagnosis functions are updated and/or additional fault diagnosis functions are stored in the component.

2. Method according to Claim 1,
**characterized in that**
the portion of the software which is not being used by the component (1) at the moment of reconfiguration is updated.

3. Method according to Claim 1 or 2,
**characterized in that**
before reconfiguration, the component (1) has basic functions for operation, and is extended with additional functions by the reconfiguration.

4. Method according to any one of the preceding Claims,
**characterized in that**
at least a portion of the software involves parameters which are used to control the component (1) or devices (3) connected to the component (1), wherein the parameters preferably involve dimming curves.

5. Method according to Claim 4,
**characterized in that**
the parameters are updated.

6. Method according to Claim 5,
**characterized in that**
in the updating of the parameters, the component (1) continues to use the old parameters during the transmission of new parameters to the component (1), and to use the new parameters after the transmission is concluded, wherein the old parameters are preferably deleted after the transmission has been concluded.

7. Method according to Claim 4, 5 or 6,
**characterized in that**
when additional parameters are stored, the component (1) uses the additional parameters after the transmission of the additional parameters has been concluded.

8. Method according to any one of the preceding Claims,
**characterized in that**
at least a portion of the software involves functions which offload computation tasks that are to be executed by a component (1) during operation onto another component (1) of the illumination system.

9. Method according to Claim 8,
**characterized in that**
the energy efficiency, the computing time, and/or the resources of the components or of the lighting system are optimized by the offloading of computation tasks.

10. Method according to any one of Claims 1 to 9,
**characterized in that**
at least some of the components are lamp-operating devices (1).

11. Method according to any one of Claims 1 to 10,
**characterized in that**
at least some of the components are controllers which are provided for controlling a plurality of lamps (3) or lamp-operating devices.

12. Component (1) for a lighting system, wherein the component (1) has stored software and a management unit (2), and wherein the management unit (2) is designed to enable an updating of at least a portion of the software stored in the component (1) and/or the storage of additional software in the component (1) during the ongoing operation of the component (1),
wherein at least a portion of the software involves fault diagnosis functions for the diagnosis and evaluation of faults in the component (1) or in devices (3) connected to the component (1),
**characterized in that**
the management unit (2) is designed to update the fault diagnosis functions and/or to store additional fault diagnosis functions in the component upon the occurrence of a fault in the component (1) or in devices (3) connected to the component (1).

13. Component according to Claim 12,
**characterized in that**
the equipment and the state of the component (1) and the software stored in the component (1) are known to the management unit (2).

14. Component according to Claim 12 or 13,
**characterized in that**
at least some of the components are lamp-operating devices (1).

15. Component according to any one of Claims 12 to 14,
**characterized in that**
at least some of the components are controllers which are provided for controlling a plurality of lamps or lamp-operating devices.

## Revendications

1. Procédé de reconfiguration de composants (1) disposés dans un système d'éclairage dans lesquels un logiciel est enregistré,
dans lequel lors de la reconfiguration d'un composant (1), au moins une partie du logiciel enregistré dans le composant (1) est mise à jour et/ou un logiciel supplémentaire est enregistré dans le composant (1),
dans lequel la reconfiguration est effectuée lors du fonctionnement en cours du composant (1),
dans lequel au moins une partie du logiciel consiste en des fonctions de diagnostic d'erreur, lesquelles diagnostiquent et évaluent des erreurs du composant (1) ou des appareils (3) connectés au composant (1),
**caractérisé en ce**
**que,** lorsqu'une erreur se produit dans le composant (1) ou les appareils (3) connectés au composant (1), les fonctions de diagnostic d'erreur sont mises à jour et/ou des fonctions de diagnostic d'erreur supplémentaires sont enregistrées dans le composant.

2. Procédé selon la revendication 1,
**caractérisé en ce**
**que** la partie du logiciel qui n'est pas utilisée par le composant (1) au moment de la reconfiguration est mise à jour.

3. Procédé selon la revendication 1 ou 2,
**caractérisé en ce**
**que** le composant (1) comporte, avant la reconfiguration, des fonctions de base pour le fonctionnement et est étendu au moyen de la reconfiguration par des fonctions supplémentaires.

4. Procédé selon l'une quelconque des revendications précédentes,
**caractérisé en ce**
**qu**'au moins une partie du logiciel consiste en des paramètres, lesquels sont utilisés pour commander le composant (1) ou les appareils (3) connectés au composant (1),
dans lequel les paramètres sont de préférence des courbes de variation.

5. Procédé selon la revendication 4,
**caractérisé en ce**
**que** les paramètres sont mis à jour.

6. Procédé selon la revendication 5,
**caractérisé en ce**
**que** lors de la mise à jour des paramètres, le composant (1), durant le transfert des nouveaux paramètres vers le composant (1), continue à utiliser les anciens paramètres et, après la fin du transfert, utilise les nouveaux paramètres, dans lequel, de préférence après la fin du transfert, les anciens paramètres sont effacés.

7. Procédé selon la revendication 4, 5 ou 6,
**caractérisé en ce**
**que** lors de l'enregistrement des paramètres supplémentaires, le composant (1), après la fin du transfert des paramètres supplémentaires, utilise les paramètres supplémentaires.

8. Procédé selon l'une quelconque des revendications précédentes,
**caractérisé en ce**
**qu**'au moins une partie du logiciel consiste en des fonctions, lesquelles confient des tâches de calcul, qui sont à exécuter par un composant (1) lors du fonctionnement, à un autre composant (1) du système d'éclairage.

9. Procédé selon la revendication 8,
**caractérisé en ce**
**qu**'en confiant des tâches de calcul, l'efficacité énergétique, le temps de calcul et/ou les ressources des composants ou du système d'éclairage sont optimisés.

10. Procédé selon l'une quelconque des revendications 1 à 9,
**caractérisé en ce**
**qu**'au moins une partie des composants sont des appareils de fonctionnement de lampe (1).

11. Procédé selon l'une quelconque des revendications 1 à 10,
**caractérisé en ce**
**qu**'au moins une partie des composants sont des contrôleurs, qui sont destinés à la commande de plusieurs luminaires (3) ou appareils de fonctionnement de lampe.

12. Composant (1) pour un système d'éclairage, dans lequel le composant (1) comporte un logiciel enregistré et une unité de gestion (2) et dans lequel l'unité de gestion (2) est conçue pour permettre une mise à jour d'au moins une partie du logiciel enregistré dans le composant (1) et/ou l'enregistrement d'un logiciel supplémentaire dans le composant (1) lors du fonctionnement en cours du composant (1),
dans lequel au moins une partie du logiciel consiste en des fonctions de diagnostic d'erreur destinées au diagnostic et à l'évaluation d'erreurs dans le composant (1) ou les appareils (3) connectés au composant (1),
**caractérisé en ce**
**que** l'unité de gestion (2) est conçue pour, lorsqu'une erreur se produit dans le composant (1) ou les appareils (3) connectés au composant (1), mettre à jour les fonctions de diagnostic d'erreur et/ou enregistrer des fonctions de diagnostic d'erreur supplémentaires dans le composant.

13. Composant selon la revendication 12,
**caractérisé en ce**
**que** l'unité de gestion (2) connaît le matériel et l'état du composant (1) et le logiciel enregistré dans le composant (1).

14. Composant selon la revendication 12 ou 13,
**caractérisé en ce**
**qu**'au moins une partie des composants sont des appareils de fonctionnement de lampe (1).

15. Composant selon l'une quelconque des revendications 12 à 14,
**caractérisé en ce**
**qu**'au moins une partie des composants sont des contrôleurs destinés à la commande de plusieurs luminaires ou appareils de fonctionnement de lampe.
